# EUROPÄISCHE PATENTSCHRIFT

(11) **EP 4 446 695 B1**
(45) Veröffentlichungstag und Bekanntmachung des Hinweises auf die Patenterteilung: **04.06.2025**
(21) Anmeldenummer: 24164711.4
(22) Anmeldetag: 20.03.2024
(51) Int. Cl.: G01B 11/06, G01B 11/02, G01B 11/08, G01B 15/02, B29C 48/09, B29C 48/92, G01N 21/27, G01N 21/3586, G01N 21/952, G01N 21/954

(54) **THZ-MESSVERFAHREN UND THZ-MESSVORRICHTUNG ZUR VERMESSUNG EINES STRANGES**
THZ MEASURING METHOD AND THZ MEASURING DEVICE FOR MEASURING A STRAND
PROCÉDÉ DE MESURE THZ ET DISPOSITIF DE MESURE THZ PERMETTANT DE MESURER UN BRIN

(30) Priorität: 31.03.2023 DE 102023108274
(43) Veröffentlichungstag der Anmeldung: 16.10.2024
(73) Patentinhaber: CiTEX Holding GmbH, 49324 Melle (DE)
(72) Erfinder: Klose, Ralph, 49324 Melle (DE)
(74) Vertreter: Bremer, Ulrich

(56) Entgegenhaltungen:
- EP-B1- 3 265 748
- DE-A1- 102016 111 044
- DE-A1- 102020 133 704

## Beschreibung

Die Erfindung betrifft ein THz-Messverfahren und eine THz-Messvorrichtung zur Vermessung eines Stranges in einem Messraum.

Eine derartige THz-Messvorrichtung und ein entsprechendes Messverfahren sind z. B. aus der DE 10 2020 133 704 A1 bekannt; um einen Messraum sind mehrere THz-Transceiver in einer gemeinsamen Ebene angeordnet, die ihren THz-Messstrahl bzw. THz-Sendestrahl entlang ihrer optischen Achse zu einer Symmetrieachse schicken, so dass die einfallende THz-Strahlung an Grenzflächen der Wände des Messobjektes teilweise reflektiert wird und der THz-Transceiver entsprechend Teil-Reflexionspeaks aufnimmt, so dass aus den Laufzeiten direkt oder indirekt Wanddicken und weitere geometrische Eigenschaften des Messobjektes ermittelt werden können.

Aus EP 3 265 748 B1 ist eine THz-Messvorrichtung bekannt, bei der von einem THz-Transceiver ausgegebene THz-Strahlung des THz-Transceivers linear fokussiert wird, wobei sie in der Messebene auf die Symmetrieachse fokussiert wird und entlang der Symmetrieachse parallel gerichtet ist. Zur Vermessung wird ein Strang mittels einer Führungseinrichtung der Messvorrichtung durch die Messvorrichtung geführt. Durch die Führungseinrichtung wird eine genaue Zentrierung des Stranges ermöglicht, so dass die Grenzflächen der beiden Wandbereiche des Stranges genau senkrecht zu der optischen Achse des THz-Messstrahls liegen. Durch den Messstrahl werden an den beiden Grenzflächen des zugewandten Wandbereichs und den beiden Grenzflächen des abgewandten Wandbereichs jeweils Teil-Reflexionspeaks erzeugt, aus deren Laufzeiten die Wanddicken ermittelt werden.

Durch eine derartige Messvorrichtung mit einer Führungseinrichtung wird eine Zentrierung des Stranges in der Messvorrichtung ermöglicht, sodass die vier Grenzflächen senkrecht zur optischen Achse des Messstrahls ausgerichtet sind. So ist der Strang nach der Extrusion noch heiß und weich bzw. pastös, so dass er sich aufgrund der Schwerkraft und mechanischer Spannungen, insbesondere auch thermischer Spannungen, fortlaufend verstellt. Bereits geringe Deplatzierungen führen jedoch dazu, dass zumindest eine der Grenzflächen nicht mehr hinreichend orthogonal zur Messachse ausgerichtet ist, so dass die Vermessung unmöglich wird. Die weiteren Führungen des Stranges in der Produktionslinie, d.h. außerhalb der Messvorrichtung, durch einen nachfolgenden Abzieher und z.B. an einem Wasserbad, alleine gewährleisten noch keine hinreichend genaue Positionierung des Stranges in der Messvorrichtung, da hier Abstände von mehreren Metern vorliegen und der weiche, heiße Strang auch schon bei freien Strecken von weniger als einem Meter deutlich durchbiegen kann, so dass in der EP 3 265 748 B1 die genaue Positionierung und Zentrierung durch die Führungseinrichtung der THz-Messvorrichtung sichergestellt wird. Somit kann insbesondere auch die Reflexion der Grenzflächen des abgewandten Wandbereichs zurück zu dem Detektor gewährleistet werden.

Eine derartige Führung des Stranges durch die Messvorrichtung ist jedoch relativ aufwändig, auch da der heiße, weiche Strang schwer zu führen ist. Weiterhin können durch diese zusätzliche Führung auch Spannungen im Strang auftreten; grundsätzlich ist es vorteilhaft, den weichen, noch aushärtenden Strang nicht unnötig zu belasten, d.h. den Strang über eine größere Strecke ungeführt abkühlen zu lassen und Verstellungen des Stranges beim Aushärten zuzulassen. Auch ist eine Nachrüstung einer bestehenden Extrusionslinie mit der THz-Messvorrichtung durch die zusätzlich vorzusehende Führungseinrichtung erschwert. Der besondere Vorteil von THz-Messvorrichtungen liegt gerade in einer kontaktlosen Vermessung; dies wird durch die Führungseinrichtung letztlich verhindert.

Weiterhin zeigt sich, dass bei dieser Messvorrichtung die Genauigkeit der ermittelten geometrischen Werte, insbesondere der Wanddicken, bei einigen Messobjekten beeinträchtigt ist. So können Messungen an Kunststoffrohren in Abhängigkeit ihrer Materialien, z. B. auch der Additive, zu unterschiedlichen Messgenauigkeiten führen.

Die DE 10 2016 111 044 A1 beschreibt eine THz-Messvorrichtung zum Vermessen eines Prüfobjektes durch eine Laufzeitmessung unter Ermittlung mindestens eines Abstandes, wobei die THz-Messvorrichtung eine THz-Sende- und Empfangseinheit zum Aussenden von THz-Strahlung und Detektieren der von dem Prüfobjekt reflektierten THz-Strahlung und eine Auswerteeinheit zur Ermittlung einer Laufzeit und mindestens eines Abstandes des Prüfobjektes aufweist. Hierbei ist mindestens eine, vorzugsweise sind mehrere passive THz-Empfangseinrichtungen derartig vorgesehen, dass ihre optischen Achsen zu der optischen Achse der THz-Sende- und Empfangseinheit versetzt oder geneigt angeordnet sind und eine von der THz-Sende- und Empfangseinheit ausgesandte und an dem Prüfobjekt reflektierte THz-Strahlung detektieren, unter Synchronisierung der THz-Sende- und Empfangseinheit mit der passiven THz-Empfangseinrichtung.

Der Erfindung liegt die Aufgabe zugrunde, ein THz-Messverfahren und eine THz-Messvorrichtung zu schaffen, die mit geringem Aufwand genaue Ermittlungen der geometrischen Eigenschaften eines Stranges nach dessen Extrusion ermöglichen.

Diese Aufgabe wird durch ein THz-Messverfahren sowie eine THz-Messvorrichtung nach den unabhängigen Ansprüchen gelöst. Die Unteransprüche beschreiben bevorzugte Weiterbildungen.

Die erfindungsgemäße THz-Messvorrichtung kann insbesondere ein erfindungsgemäßes THz-Messverfahren durchführen. Das erfindungsgemäße THz-Messverfahren kann insbesondere mit der erfindungsgemäßen THz-Messvorrichtung durchgeführt werden.

Somit wird bei der Ermittlung der Schichtdicke bzw. Wanddicke des Stranges jeweils nur die Schichtdicke des dem THz-Transceiver zugewandten Wandbereichs ermittelt. In dem Messsignal werden hierfür insbesondere die vorderen bzw. zeitlich ersten Reflexionspeaks, insbesondere somit der erste und zweite Reflexionspeak des Messsignals, für die Berechnung der Schichtdicke, insbesondere als Laufzeitdifferenz, herangezogen.

Hingegen wird an jeder Messposition die Schichtdicke des jeweils abgewandten, hinteren Wandbereichs - anders als bei der eingangs genannten EP 3 265 748 B1 - nicht ermittelt, bzw. diese Werte nicht für die Ermittlung verwendet, obwohl die nachfolgenden Reflexionspeaks, d.h. insbesondere bei einem einschichtigen Rohr der dritte und vierte Reflexionspeak, in dem Messsignal grundsätzlich zur Verfügung stehen.

Der Erfindung liegt insbesondere die Erkenntnis zugrunde, dass eine Vermessung des abgewandten Wandbereichs oftmals durch verschiedene Einfluss-Faktoren beeinträchtigt oder verschlechtert werden kann. So kann insbesondere eine relevante Deplatzierung des Stranges vorliegen, der im Allgemeinen - wie eingangs ausgeführt - mit seiner Symmetrieachse nicht genau auf der Symmetrieachse des Messraums liegt, da sich insbesondere ein extrudiertes, noch weiches Rohr beim Transport deutlich durchbiegt. Bereits eine geringe Deplatzierung in der Messebene führt insbesondere bei dem abgewandten Wandbereichs dazu, dass die an den Grenzflächen teilreflektierten Strahlen aufgrund ihrer längeren Wegstrecke und der größeren Winkel-Fehlstellung nicht mehr zurück zu dem Transceiver gelangen. Es zeigt sich, dass die Reflexionen an den Grenzflächen des zugewandten Wandbereichs hingegen aufgrund der deutlich geringeren Wegstrecke sowie der geringeren Winkel-Fehlstellung in hinreichendem Maß zurück zu dem Transceiver gelangen, um als Signal ausgewertet zu werden.

Somit wird erfindungsgemäß insbesondere auch eine Vermessung durch eine THz-Messvorrichtung ohne Führungseinrichtung ermöglicht; bei einer derartigen THz-Messvorrichtung ohne Führungseinrichtung erfolgt somit lediglich eine externe Führung an weiter beabstandeten Punkten, insbesondere durch den weiter hinten stehenden Abzieher, der den Strang in der Transportrichtung abzieht, sowie am Extruder selbst sowie z.B. in einem von der THz-Messvorrichtung beabstandeten Wasserbad. Der noch weiche, mechanischen Spannungen und einem thermisch bedingtem Schrumpf oder Verzug unterliegende Strang wird somit insbesondere im Bereich der THz-Messvorrichtung frei hängend vermessen und kann sich in der Messebene verstellen. Durch die Ausbildung der THz-Messvorrichtung ohne Führungseinrichtung werden einige weitere Vorteile erreicht. So ist die THz-Messvorrichtung einfacher und kostengünstiger, weiterhin kann sie besser nachgerüstet werden, da zusätzliche Führungen die Produktionslinie insgesamt beeinflussen können. Auch erfolgt keine zusätzliche mechanische Belastung des weichen Stranges, sondern eine rein kontaktlose Vermessung.

Für größere Verstellungen des Stranges kann eine Verstelleinrichtung zur Verstellung der gesamten THz-Messvorrichtung in den beiden Dimensionen der Messebene vorgesehen sein, z.B. durch einen Kreuztisch. Eine derartige Verstelleinrichtung ermöglicht hierbei größere Verstellungen, die auch durch eine in der THz-Messeinrichtung vorgesehene Führungseinrichtung nicht kompensiert werden können, weiterhin ist eine derartige Verstelleinrichtung ebenfalls einfach nachrüstbar und ermöglicht weiterhin eine kontaktlose Vermessung des Stranges.

Die besondere erfindungsgemäße Wirkung, dass nur zugewandte Wandbereiche vermessen werden und hierdurch bereits ein größerer Anteil der an den Grenzflächen teilreflektierten Strahlung zurück zum Transceiver gelangt, wird insbesondere bei Einsatz von paralleler Strahlung statt der herkömmlichen Fokussierung auf die Rohrachse nochmals verstärkt. Parallele Strahlung hat zwar bei genauer Zentrierung des Stranges gegenüber der herkömmlichen Fokussierung der EP 3 265 748 B1 den Nachteil, dass ein Teil der Strahlung von den Grenzflächen nicht entlang der Messachse zurückreflektiert wird; dies macht sich insbesondere bei der Reflektion an den Grenzflächen des abgewandten Wandbereichs bemerkbar. Insbesondere von den Grenzflächen des zugewandten Wandbereichs wird jedoch noch ein hinreichender Anteil zurück zum Transceiver reflektiert. Weiterhin wird anders als bei Fokussierung auf die - vermeintliche - Position der Rohrachse auch bei einer Deplatzierung des Stranges ein relevanter Anteil zurück zum Transceiver reflektiert, da ein Teil der parallelen Strahlung unter einem günstigeren Winkel auf die runden Grenzflächen trifft. Somit wird insbesondere durch parallele Strahlung die erfindungsgemäße Wirkung der Vermessung nur des zugewandten Wandbereichs in besonderer Weise verstärkt.

Ein weiterer erfindungsgemäßer Vorteil der Vermessung von lediglich zugewandten Wandbereichen, mit nachfolgender Mittelung, liegt in der Signalstärke der detektierten Strahlung durch geringere Absorption im Material. So kann bereits durch Additive, z. B. Ruß als übliches, strahlungsabsorbierendes Material, die Vermessung des abgewandten Wandbereichs erschwert werden. Der THz-Messstrahl wird in dem Material des zugewandten Wandbereichs teilweise absorbiert und in seiner Intensität geschwächt, und nachfolgend ergänzend im abgewandten Wandbereich absorbiert, und die teilreflektierte Strahlung wird nachfolgend beim erneuten Durchqueren des zugewandten Wandbereichs weiter geschwächt. Weiterhin führen die Teilreflexionen an den zugewandten Grenzflächen bereits zu einer Abschwächung der Intensität des durchtretenden Strahls; auch führen Mehrfachreflexionen der teilreflektierten Strahlen an den Grenzflächen, d.h. wiederholte Reflexionen von bereits reflektierter oder teilreflektierter Strahlung, zu Signalabschwächungen und Signalverbreiterungen, die insbesondere in den zeitlich nachfolgenden, abgewandten Reflexionspeaks des abgewandten Wandbereichs relevant sind. Durch Vermessung lediglich von zugewandten Wandbereiches können diese Nachteile weitgehend vermieden werden.

Weiterhin kann das Material des noch weichen Strangs durch Sagging-Effekte, d. h. ein Fließen insbesondere der Innenfläche, von der Idealform abweichen. Hierdurch wird insbesondere die Vermessung des abgewandten Wandbereichs problematisch, der schon bei kleinen Fehlstellungen derartig positioniert sein kann, dass die Teil-Reflexionspeaks nicht hinreichend genau entlang der optischen Achse zurück reflektiert werden. Eine Fehlstellung des Stranges oder einer Grenzfläche durch Sagging gegenüber der Symmetrieachse des Messraums führt im Allgemeinen noch nicht dazu, dass die jeweiligen Transceiver kein Reflexionssignal ihres zugewandten, vorderen Wandbereichs mehr erhalten, da die Ablenkung in lateraler Richtung bei geringerer Entfernung für kleine Ablenkwinkel gering ist. Während somit die Vermessung des zugewandten Wandbereichs auch bei leichten Fehlstellungen und bei Absorption des Materials im Allgemeinen hinreichend genau und sicher erfolgt, wird die Vermessung des abgewandten Wandbereichs durch derartige Einflussgrößen deutlich verschlechtert. So erfahren die nachfolgend reflektierten Strahlen des abgewandten Wandbereichs aufgrund des größeren Laufwegs durch den Innenraum des Stranges einen größeren lateralen Versatz zur optischen Achse und können gegebenenfalls von dem Transceiver nicht mehr detektiert werden.

Erfindungsgemäß sind mindestens drei THz-Messeinheiten vorgesehen, die jeweils einen THz-Transceiver und einen gegenüber liegenden Reflektor aufweisen. Die zweite und dritte THz-Messeinheit sind gegenüber einer mittleren ersten THz-Messeinheit in umgekehrter Ausrichtung angeordnet, d.h. es liegt eine in Umfangsrichtung alternierende Anordnung aus Transceivern und Reflektoren vor, wobei die optischen Achsen der THz-Messeinheiten um einen Versatz-Winkel zueinander versetzt sind. Hierbei erfolgt eine Vermessung des abgewandten Wandbereichs der ersten THz-Messeinheit als Berechnung, insbesondere Mittelung, der Messungen der beiden benachbarten THz-Messeinheiten, die jeweils ihren zugewandten Wandbereich vermessen. Die abgewandte Wanddicke der ersten THz-Messeinheit kann hierbei durch eine direkte arithmetische Mittelung der ermittelten zugewandten Wanddicken der benachbarten THz-Messeinheiten berechnet werden. Somit kann eine Vermessung durch lediglich zugewandte, vordere Wandbereiche erfolgen, bei der abgewandte Wandbereiche durch benachbarten zugewandte Wandbereiche berechnet bzw. gemittelt werden. Es zeigt sich überraschender Weise, dass die Mittelung benachbarter Messungen bessere Ergebnisse liefert als eine direkte Messung des abgewandten Messbereichs, die durch die oben genannten Effekte der Fehlplatzierung, weiterhin auch der Absorption sowie Signalverbreiterungen durch Mehrfachreflexionen, beeinträchtigt ist.

Weiterhin können bei der alternierenden Anordnung die Reflektoren der benachbarten Messeinheiten als Blenden für den dazwischen liegenden Transceiver dienen, z.B. auch nur einen Spalt für den Transceiver freilassen, so dass Streustrahlung abgeschirmt werden kann, wodurch sich eine weitere vorteilhafte synergistische Wirkung ergibt.
Eine Schichtdicke des zugewandten Wandbereichs wird insbesondere aus Laufzeiten des ersten Reflexionspeaks an der Außenfläche und des zweiten Reflexionspeaks an der Innenfläche des zugewandten Wandbereichs ermittelt. Bei mehrschichtigen Strängen können entsprechend auch mehr als zwei Reflexionspeaks des zugewandten Wandbereichs der THz-Transceiver ermittelt werden, um entsprechend mehrere Schichtdicken des Stranges zu ermitteln.

Die schwächeren nachfolgenden, abgewandten Reflexionspeaks können grundsätzlich zum Vergleich mit den durch Mittelung ermittelten Werten herangezogen werden; dies ist grundsätzlich aber nicht erforderlich.

Gemäß einer vorteilhaften Ausbildung sind mehr als nur drei THz-Mess-einheiten um den Messraum herum angeordnet, so dass zum einen der Versatz-Winkel zwischen den Reflektoren und benachbarten Transceivern gering ist, wodurch die Genauigkeit der Mittelung verbessert wird, und weiterhin zu jeder THz-Messeinheit jeweils zwei benachbarte THz- Messeinheiten vorgesehen sind, so dass zu jeder THz-Messeinheit eine Mittelung durch die benachbarten THz-Messeinheiten erfolgen kann. Somit sind vorteilhafterweise sämtliche THz-Messeinheiten gleichberechtigt und ermöglichen eine direkte Vermessung ihres zugewandten, vorderen Wandbereichs und indirekte Vermessung durch die benachbarten THz-Messeinheiten.

Somit ist insbesondere bei dichter Anordnung grundsätzlich kein apparativer Mehraufwand gegenüber einer Anordnung, die die direkten Messsignale des abgewandten Wandbereichs heranzieht, erforderlich.

Weiterhin kann die Wanddicke des abgewandten Wandbereichs nicht nur durch die direkt benachbarten THz-Transceiver, sondern auch durch die übernächsten THz-Transceiver bzw. eine Folge von THz-Transceivern in Umfangsrichtung ermittelt werden. Somit kann gegenüber einer arithmetischen Mittelung der lediglich beiden benachbarten THz-Transceiver eine höhere Genauigkeit erreicht werden. Der Verlauf der Wanddicke des Stranges kann somit über größere Bereiche als Mittelung, insbesondere auch als Nachbildung in einem Modell, genau überwacht werden.

Die Messungen können grundsätzlich gleichzeitig erfolgen, da sich aufgrund des Winkel-Versatzes die THz-Transceiver bei hinreichend engem Strahl nicht beeinflussen. Weiterhin können die Vermessungen auch zeitlich alternierend erfolgen. Bei einer derartigen alternierenden Ansteuerung können die jeweils passiven Transceiver Streustrahlung an Fehlstellen oder Schrägstellungen der Grenzflächen bei z. B. Sagging detektieren, wodurch eine bessere Auswertung von Ungenauigkeiten ermöglicht wird. Weiterhin können Strahlen auch in unterschiedlichen Frequenzbereichen und Polarisationen ausgegeben werden; ein besonderer Vorteil liegt allerdings in der Verwendung identischer Transceiver, da hierdurch die Kosten gesenkt werden können, da einheitliche THz-Messeinheiten eingesetzt werden.
Durch die Vermessung durch die mehreren THz-Messeinheiten kann eine Fehlstellung des Stranges gegenüber der Symmetrieachse ermittelt und bei der Bewertung der Wanddicken herangezogen werden, um Abweichungen der Messsignale nicht fälschlicherweise als Qualitätsverschlechterung des Stranges zu bewerten, obwohl lediglich eine Deplatzierung des Stranges gegenüber der Symmetrieachse vorliegt. Weiterhin kann die Ermittlung der Deplatzierung auch zur Korrektur der Führung des Stranges herangezogen werden.

Die THz-Messvorrichtung kann somit insbesondere auch stationär ausgebildet sein, d.h. nicht rotierend oder reversieren, und dennoch eine umfängliche Vermessung ermöglichen.
Grundsätzlich kann die THz-Messvorrichtung auch in Umfangsrichtung rotieren oder reversieren, z.B. bei Ausbildung von weniger Messeinheiten.

Der Frequenzbereich des THz-Messstrahls kann insbesondere im Frequenzbereich von 5 GHZ bis 50 THz, insbesondere 10 GHZ bis 10 THZ, insbesondere 20 GHz bis 3 THZ vorzugsweise 50GHz bis 1 THz liegen. Somit kann die THz-Strahlung sich auch in den Bereich der Radarstrahlung und/oder Mikrowellenstrahlung erstrecken. Der THz-Messstrahl kann insbesondere als direkte Laufzeitmessung und/oder mittels Frequenzmodulation und/oder als gepulste Strahlung ausgesandt und detektiert werden. Insbesondere ein FMCW-Radar ermöglicht genaue Messungen, da die Transceiver kostengünstig und kleinbauend sind und daher eine hohe Anzahl von THz-Messeinheiten angeordnet werden kann.

Weiterhin ist bei allen Ausführungsformen vorteilhafterweise eine Kalibriermessung möglich. So wird erfindungsgemäß erkannt, dass der Totalreflexionspeak, den der THz-Messstrahl an dem hinter dem Messraum und somit hinter dem Strang liegenden Reflektor erfährt, auch bei schlechten Bedingungen hinreichend stark ist, insbesondere auch deutlich stärker als die Teil-Reflexionen an den Grenzflächen, da die Fehlplatzierung des Messobjektes den Totalreflexionspeak nicht bzw. nicht relevant beeinflusst und dass Signal einer Total-Reflexion deutlich stärker ist als die Signale von Teilreflexionen. Somit kann der Total-Reflexionspeak auch bei stärkerer Absorption in die Vermessung einbezogen werden. Es kann insbesondere zunächst eine Kalibriermessung des leeren Messraums, d.h. insbesondere vor Einführung des Messobjektes, durchgeführt werden, bei der somit die Leer-Laufzeit der THz-Messstrahlen von den jeweiligen Transceivern zu den Reflektoren und zurück als Total-Reflexionspeak gemessen wird. Hierdurch kann in Kombination mit der nachfolgenden Messung der Laufzeit bei aufgenommenem Strang eine Gesamt-Verzögerung ermittelt werden, die zusammen mit den Laufzeitdifferenzen der Grenzflächen verwendet werden kann, um sowohl Brechungsindex als auch Schichtdicken zu ermitteln, insbesondere zusätzlich auch geometrischen Eigenschaften wie Außendurchmesser und Innendurchmesser. Die Mittelung des abgewandten Wandbereichs umgeht das Problem, dass der Reflektor eine Positionierung eines Transceivers direkt vor diesem Wandbereich verhindert. Somit kann erfindungsgemäß die Kalibriermessung mit Reflektor mit einer Vermessung lediglich zugewandter Wandbereiche kombiniert werden. Die Messung des Total-Reflexionspeaks bei aufgenommenem Strang kann zusammen mit der Messung der Teil-Reflexionspeaks erfolgen, oder auch sukzessive in einzelnen Mess-Schritten.
Die Erfindung wird im Folgenden anhand der beiliegenden Zeichnungen an einigen Ausführungsformen näher erläutert. Es zeigen:
- Fig. 1: eine THz-Messvorrichtung gemäß einer Ausführungsform zur Vermessung wenigstens einer Messachse mit drei Mess-Einheiten;
- Fig. 2: eine THz-Messvorrichtung mit neun Mess-Einheiten aus Transceiver und Spiegel, zur Vermessung in neun Messachsen;
- Fig. 3: eine weitere Ausführungsform mit geraden Spiegeln;
- Fig. 3a: einen Ausschnitt aus Fig. 3; und
- Fig. 4: ein Signaldiagramm bei Auswertung eines THz-Messsignals.

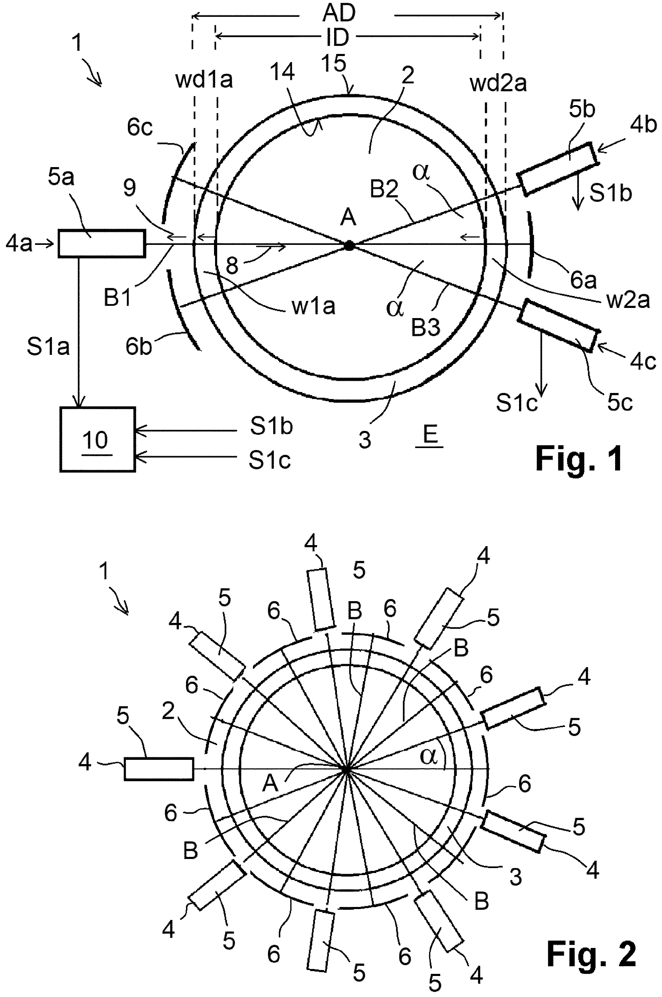

Eine THz-Messvorrichtung 1 weist gemäß Figur 1 und 2 einen Messraum 2 auf, durch den ein Strang, hier ein extrudiertes Rohr 3, fortlaufend entlang einer Symmetrieachse A transportiert und vermessen wird. Hierbei ist insbesondere keine Führungseinrichtung vorgesehen, sondern das von einem Extruder ausgegebene Rohr 3 wird z.B. an einem in Transportrichtung hinteren Punkt durch einen Abzieher abgezogen und verläuft zwischen Extruder und dem hinteren Punkt frei durch den Messraum 2, so dass das noch weiche, mechanischen Spannungen und einem thermisch bedingtem Schrumpf oder Verzug unterliegende Rohr 2 sich insbesondere auch in der Messebene verstellen kann und somit im Allgemeinen nicht genau entlang der Symmetrieachse A geführt wird.

Die THz-Messvorrichtung 1 weist mehrere THz-Messeinheiten 4 auf; gemäß Figur 1 sind drei THz-Messeinheiten 4a, 4b, 4c vorgesehen, die jeweils aus einem THz-Transceiver 5 und einem Reflektor 6 gebildet sind und wie dargestellt um den Messraum 2 in Umfangsrichtung verteilt angeordnet sind. Jeder THz-Transceiver 5, 5a, 5b, 5c ist an einer Messposition MP1, MP2, MP3 vorgesehen, und der jeweilige Reflektor 6, 6a, 6b, 6c an einer Reflektorposition RP1, RP2, RP3.

Hierbei liegen eine zweite Messeinheit 4b und ein dritte Messeinheit 4c der ersten Messeinheit 4a versetzt gegenüber. In der Ausführungsform der Figur 1 mit den drei THz- Messeinrichtungen 4a, 4b und 4c wird somit die erste THz-Messeinheit 4a gebildet durch den ersten THz-Transceiver 5a, der eine erste optische Achse B1 festlegt, und den auf der ersten optischen Achse B1 gegenüberliegend angeordneten ersten Reflektor 6a, entsprechend bei den anderen THz-Messeinheiten 4b, 4c. Die optischen Achsen B1, B2, B3 der drei THz-Messeinheiten 4a, 4b, 4c liegen in der gemeinsamen Messebene E und kreuzen sich in der Symmetrieachse A. Der zweite THz-Transceiver 5b und der dritte THz- Transceiver 5c liegen benachbart zu dem ersten Reflektor 6a, wobei die zweite optische Achse B2 und die dritte optische Achse B3 gegenüber der ersten optischen Achse B1 jeweils um einen Versatz-Winkel α versetzt sind, so dass die erste optische Achse B1 mittig zwischen den optischen Achsen B2 und B3 verläuft. Der Versatz-Winkel α ist hierbei hinreichend klein, um die nachfolgend beschriebene Mittelung durchzuführen. Somit liegen die Reflektorpositionen RP1, RP2, RP3 der Reflektoren 6a, 6b, 6c am Umfang des Messraums 2 bzw. der Messvorrichtung 1 zwischen jeweils den beiden Messpositionen MP1, MP2, MP3 der beiden benachbarten THz-Transceiver 5a, 5b, 5c. Die THz-Messeinheiten 4a, 4b, 4c sind vorzugsweise statisch um den Messraum 2 herum angeordnet, d. h. vorzugsweise nicht rotierend oder reversierend. Die THz-Messeinheiten 4a, 4b, 4c geben Messsignale S1a, S1b, S1c zu einer Steuer- und Auswerteeinheit 10 aus, die eine Ermittlung durchführt.

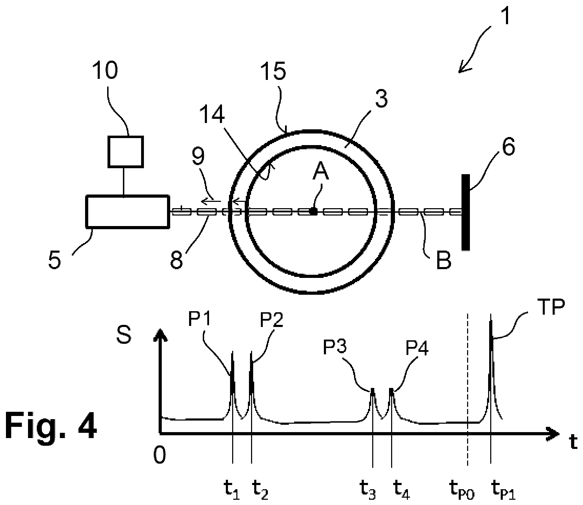

Vor Einführen des Rohres 3 wird zunächst eine Kalibriermessung durchgeführt, bei der die gezeigte THz-Messvorrichtung 1 bei leerem Messraum 2, d. h. ohne Strang bzw. Rohr 3, eine Messung durchführt, die als Kalibrierungsmessung zur nachfolgenden Ermittlung von sowohl Wanddicken als auch Brechungsindex herangezogen wird. Nachfolgend wird das Rohr 3 kontinuierlich entlang der Symmetrieachse A durch den Messraum 2 geführt und vermessen. Der THz-Transceiver 5a sendet hierbei einen THz-Strahl 8 entlang seiner optischen Achse B1 aus, der zunächst durch einen zugewandten Wandbereich w1a des Rohres 3 tritt, nachfolgend durch das Rohrinnere des Rohres 3 zu dem abgewandten Wandbereich w1b des Rohres 3, und nachfolgend zu dem ersten Reflektor 6a gelangt, der den ersten THz-Strahl 8a entlang der ersten optischen Achse B1 zurück zu dem ersten THz-Transceiver 5a reflektiert. Der erste THz-Strahl 8a wird an den Grenzflächen des zugewandten Wandbereichs w1a und des abgewandten Wandbereichs w2a jeweils teilreflektiert, unter Reflexion von reflektierter THz-Strahlung 9, die entlang der optischen Achse B1 zu dem THz-Transceiver 5a gelangt. Hierbei wird somit die an einer Außenfläche 15 und einer Innenfläche 14 des Rohres 3 reflektierte THz-Strahlung 9 von dem ersten Transceiver 5a detektiert. Somit nimmt der THz-Transceiver 5a ein in Fig. 4 gezeigtes Messsignal auf, das einen ersten Reflexionspeak P1 an der Außenfläche 15 im zugewandten Wandbereich w1a, einen zweiten Reflexionspeak P2 an der Innenfläche 14 im zugewandten Wandbereich w1a, dann nach Durchqueren des Rohrinneren entsprechende Reflexionspeaks P3 und P4 im abgewandten Wandbereich w2a des Rohres 3, und den Totalreflexionspeak TP an dem ersten Reflektor 6a zeigt, zu den angegebenen Zeitpunkten t1, t2, t3, t4 und tP1. In der Kalibriermessung wird entsprechend lediglich der Totalreflexionspeak TP zum Zeitpunkt tP0 gemessen; bei der nachfolgenden Objektmessung ist der Totalreflexionspeak TP zu einem etwas späteren Zeitpunkt tP1 verschoben. Durch den Vergleich der Messungen können sowohl die geometrischen Eigenschaften des Rohres 3 entlang der ersten optischen Achse B1, d. h. insbesondere Außendurchmesser AD, Innendurchmesser ID, und Wanddicken wd1, wd2, als auch der Brechungsindex n3 des Rohres 3 ermittelt werden.

Erfindungsgemäß wird vorteilhafterweise erkannt, dass bei der Ermittlung der abgewandten Wanddicke wd2a des abgewandten Wandbereichs w2a der dritte und vierte Reflexionspeak P3 und P4 des abgewandten Wandbereichs w2a nicht herangezogen werden, sondern als Mittelung der Messungen der benachbarten THz-Messeinheiten 4b, 4c ermittelt werden. Die zeitlich nachfolgenden, abgewandten Reflexionspeaks P3 und P4 sind bei einigen Rohren 3 bzw. Strängen deutlich schwächer und verbreitert, was insbesondere durch die Dämpfung der THz-Strahlung in dem Rohrmaterial sowie Fehlplatzierungen des Rohres 3 gegenüber der Symmetrieachse A bewirkt wird. Zur Ausbildung der zeitlich nachfolgenden Reflexionspeaks P3 und P4 treten der THz-Messstrahl 8 und die reflektierte Strahlung 9 durch mehrere Grenzflächen und eine größere Materialbreite, wobei das Rohrmaterial im Allgemeinen auch dämpfende, also energieabsorbierende Eigenschaften haben kann, die insbesondere auch von Additiven wie z.B. Ruß oder Graphit abhängen, die den Rohrmaterialien in unterschiedlichen Konzentrationen zugegeben werden. Weiterhin führen aber auch Fehlplatzierungen und Formabweichungen des Rohres zu Abweichungen des Strahlverlaufs gegenüber der idealen optischen Achse B1, die sich in den zeitlich nachfolgenden Reflexionspeaks P3 und P4 stärker auswirken.

Wie gezeigt sind bei den benachbarten Messeinheiten 4b und 4c die Transceiver 5b und 5c benachbart zu dem ersten Reflektor 6a angeordnet, d. h. in alternierender Anordnung der Transceiver 5 und des Reflektors 6. Die zweite Messeinheit 4b und dritte Messeinheit 4c führen entsprechende Messungen wie die erste THz-Messeinheit 4a aus, d. h. die Kalibriermessung bei leerem Messraum 2, und nachfolgende Objektvermessung mit aufgenommenem Rohr 3. Hierbei werden wiederum zumindest die Reflexionspeaks P1 und P2 des THz-Messstrahls 5b entlang der optischen Achse B2, d. h. die Teilreflexionen an der Außenfläche 13 und Innenfläche 14 des Rohres 3, herangezogen, und entsprechend der erste Messpeak P1 und der zweite Messpeak P2 der dritten THz-Messeinheit 4c entlang der dritten optischen Achse B3. Weiterhin können die Totalreflexionspeaks TP der zweiten und dritten Messung herangezogen.

Nachfolgend erfolgt die Ermittlung der abgewandten Wanddicke wd2a als Mittelung der Messungen der THz-Messeinheiten 4b und 4c. Hierbei wird die Wanddicke wd2 entlang der ersten optischen Achse B1 berechnet aus einer Mittelung der Wanddicken wd1 des jeweils zugewandten Wandbereichs entlang der zweiten optischen Achse B2 und der dritten optischen Achse B3. Diese Mittelung kann insbesondere als direkte arithmetische Mittelung, d. h. die Hälfte der Summe der ermittelten Wanddicken entlang der optischen Achse B1 und B2 erfolgen. Weiterhin sind auch Mittellungen über mehrere Transceiver und Berechnungen von Wandverläufen möglich, wie weiter unten beschrieben wird.

Somit können die starken Messpeaks P1 und P2 des jeweils zugewandten Wandbereichs w1a jeder THz-Messeinheit 4a, 4b und 4c zur Ermittlung beider Wanddicken w1a und w2a, sowie auch der weiteren geometrischen Eigenschaften des Rohres 3, d.h. Außendurchmesser AD und Innendurchmesser ID, herangezogen werden.

Grundsätzlich ist es möglich, die durch Mittelung ermittelten abgewandten Wanddicken wd2 zu vergleichen mit den Messungen der Messpeaks P3 und P4; dies ist jedoch grundsätzlich nicht erforderlich.

Bei der Ausführungsform der Figur 2 sind entsprechend neun THz-Messeinheiten 4 in Umfangsrichtung um den Messraum 2 und somit um das aufgenommene Rohr 3 herum angeordnet, d. h. symmetrisch zur Symmetrieachse A, z.B. mit jeweils gleichem Versatz-Winkel alpha zueinander. Ihre optischen Achsen B schneiden sich somit in der Symmetrieachse A. Somit ergibt sich eine in Umfangsrichtung alternierende Anordnung aus THz-Transceivern 5 und Reflektoren 6. Hierbei kann jeder THz-Transceiver 5 jeweils als erster THz-Transceiver 5a gemäß Figur 1 zunächst eine Messung seines zugewandten Wandbereichs w1a durchführen, und sein jeweils abgewandter Wandbereich w2a durch Mittelung der gegenüberliegenden, benachbarten THz-Messeinheiten erfolgen. Durch die symmetrische und enge Anordnung kann somit für jeden THz-Transceiver 5 aus den jeweils benachbarten THz-Messeinheiten 4 eine Ermittlung mit hoher Genauigkeit erfolgen, so dass die hier gezeigte Anordnung aus neun THz-Messeinheiten 4 eine vollumfängliche Vermessung des Rohres 3 entlang der gezeigten neun Messachsen B ermöglicht. Bei Anlagen mit größeren Durchmessern können somit z.B. 15 bis 23, insbesondere 19 Mess-Einheiten 4 alternierend vorgesehen sein.

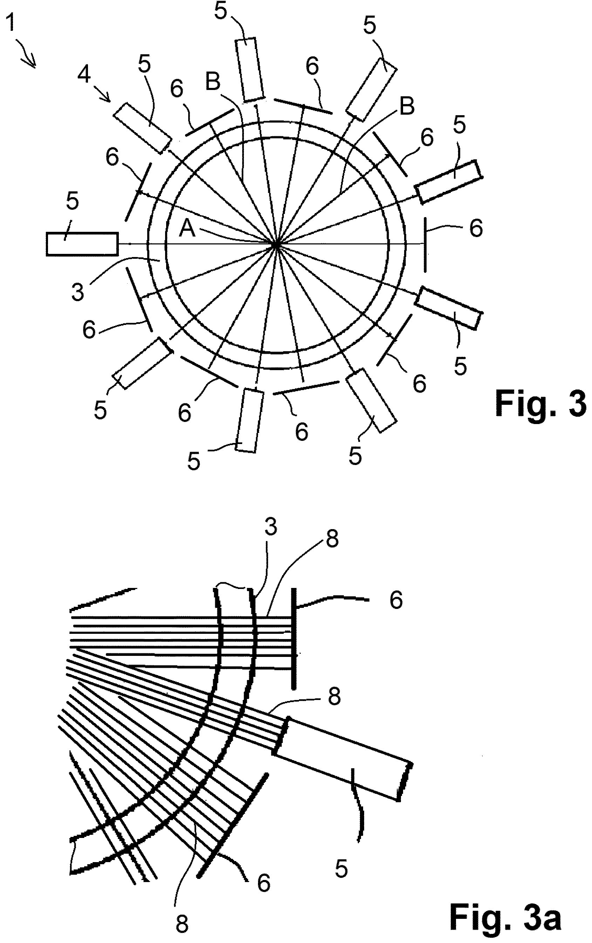

Bei der Ausführungsform der Figur 3 sind die Reflektoren 6 plan ausgebildet, statt der in Figur 1 und 2 gezeigten konvexen Ausbildung. Hier werden vorteilhafterweise parallel ausgegebene THz-Messstrahlen 8 eingesetzt, die gegenüber fokussierten THz-Messstrahlen 8 den Vorteil aufweisen, dass die Laufzeiten der Strahlenbereiche gleich sind; bei einer herkömmlichen Fokussierung bzw. Bündelung der THz-Messstrahlen 8 durch die Optik der THz-Transceiver 5, wie sie auch zum Teil im eingangs genannten Stand der Technik erfolgt, ergeben sich für äußere Bereiche des Strahlenbündels längere Laufwege als für innere, so dass das Messsignal hierdurch negativ beeinflusst, z.B. verbreitert wird. Es zeigt sich insbesondere, dass bei der oben beschriebenen Vermessung der zugewandten Wandbereiche w1a eine Bündelung nicht so hilfreich ist, wie bei herkömmlichen Vermessungen, bei denen durch die Bündelung bzw. Fokussierung die Intensität und somit Signalstärke der schwächeren Reflexionspeaks erhöht werden soll.

Somit wirkt eine parallele Strahlführung gemäß Fig. 3a in besonderer Weise mit der beschriebenen Heranziehung nur der zugewandten Reflexionspeaks P1 und P2, sowie des Totalreflexionspeaks TP, zusammen.

Grundsätzlich können die THz-Transceiver 5 im gleichen Frequenzbereich arbeiten, da sie sich nicht beeinflussen. Somit können gleiche THz-Transceiver 5 verwendet werden, insbesondere auch in enger Anordnung zueinander, da die Streustrahlung bei der Vermessung der zugewandten Wandbereiche w1a nicht so relevant ist und die Ermittlung der abgewandten Wanddicke verbessert. Somit kann durch die enge Anordnung erfindungsgemäß insbesondere auch eine statische Anordnung der THz-Messeinheiten 4 vorgesehen sein, da durch die dichte Anordnung eine weitgehend vollumfängliche Vermessung ermöglicht wird.

Weiterhin ist auch eine Trennung durch z. B. unterschiedliche Polarisationen der THz-Strahlen möglich.

Die gegenüberliegenden Reflektoren 6 können weiterhin vorteilhafterweise auch als Streublende der zwischen ihnen aufgenommenen THz-Transceiver 5 dienen, wie aus Figur 2 und 3 ersichtlich. Hierbei können die Freiräume zwischen den Reflektoren 6 entsprechend klein gehalten werden, um lediglich optische Strahlung entlang der optischen Achsen B durchzulassen, sodass die Streublenden durch die Reflektoren ausgebildet werden.

In die Berechnung der abgewandten Wanddicke wd2a einer Mess-Einheit 4a können zusätzlich zu den Messsignalen der unmittelbar benachbarten Mess-Einheiten 4b und 4c, wie es in Fig. 1 gezeigt ist, auch Messsignale der nachfolgend benachbarten THz-Transceiver 4 einbezogen werden, insbesondere bei Ausführungsformen mit hoher Anzahl und somit hoher Dichte von THz-Messeinheiten 4. Somit kann die Ermittlung der abgewandten Wanddicke wd2a jeder THz-Messeinheit 4 als Mittelung über mehrere THz-Messeinheiten, insbesondere als Wanddickenverlauf ermittelt werden.

Es kann somit auch die Ermittlung eines umlaufenden Flächenverlaufs der Flächen 14 und 15 erfolgen.

### Bezugszeichenliste

1 THz-Messvorrichtung
2 Messraum
3 Strang, insbesondere Rohr
4 THz-Messeinheit
4a, 4b, 4c erste bis dritte THz-Messeinheit
5 THz-Transceiver
6 Reflektor
5a, 5b,5c erster bis dritter THz-Transceiver
6a, 6b, 6c erster bis dritter Reflektor
8 THz-Messstrahl
9 reflektierte THz-Strahlung
10 Steuer- und Auswerteeinheit
14 Innenfläche
15 Außenfläche
A Symmetrieachse
B, B1, B2, B3 optische Achsen
MP1, MP2, MP3 Messposition des THz-Transceivers
RP1, RP2, RP3 Reflektorposition des Reflektors
NA Nachbarschaftsbereich (ergänzen)
α Versatz-Winkel der optischen Achsen B
P1, P2 erster und zweiter Reflexionspeak, zugewandte Reflexionspeaks
P3, P4 dritter und vierter Reflexionspeak, zeitlich nachfolgende, abgewandte Reflexionspeaks
S1a, S1b. S1c Messsignale
TP Totalreflexionspeak
w1a zugewandter Wandbereich
w2a abgewandter Wandbereich
wd1a zugewandte Wanddicke des zugewandten Wandbereichs W1a
wd2a abgewandte Wanddicke des abgewandten Wandbereichs W2a
AD Außendurchmesser
ID Innendurchmesser

## Patentansprüche

1. THz-Messverfahren zur Vermessung eines transportierten Stranges (3), insbesondere eines extrudierten Rohres (3), in einem Messraum (2) einer THz-Messvorrichtung (1), mit mindestens folgenden Schritten:
- Bereitstellen von mindestens drei THz-Messeinheiten (4) um den Messraum (2) herum, wobei die THz-Messeinheiten (4) jeweils einen THz-Transceiver (5, 5a, 5b, 5c) mit einer optischen Achse (B) und einen auf der optischen Achse (B) angeordneten und im Messraum (2) gegenüberliegenden Reflektor (6; 6a, 6b, 6c) aufweisen,
- Transportieren des Stranges (3) durch den Messraum (2),
- von jeder THz-Messeinheit (4, 4a, 4b, 4) jeweils
- Aussenden eines THz-Messstrahls (8) von dem THz-Transceiver (5) entlang seiner optischen Achse (B) und
- Detektion reflektierter THz-Strahlung (9), die von dem dem THz-Transceiver (5) zugewandten Wandbereich teilreflektiert worden ist und Detektion von THz-Strahlung (9), die an dem gegenüber liegenden Reflektor (6) reflektiert worden ist,
und für zumindest eine erste THz-Messeinheit (4a)
- Ermitteln einer zugewandten Wanddicke (wd1a) auf der ersten optischen Achse (B1) durch ein erstes Messsignal des ersten Transceivers (5a),
**gekennzeichnet durch,**
- Ermitteln einer abgewandten Wanddicke (wd2a) des dem Transceiver (5a) abgewandten Wandbereichs auf der ersten optischen Achse (B1) durch die Messsignale (S1b, S1c) der in Umfangsrichtung zu dem ersten Reflektor (6a) benachbarten THz-Transceiver (5b, 5c) der benachbarten THz-Messeinheiten (4b, 4c),
- wobei die THz-Messeinheiten (4) alternierend dahingehend angeordnet sind, dass ein erster Reflektor (6a) einer ersten THz-Messeinheit (4a) benachbart ist zu einem zweiten THz-Transceiver (5b) einer zweiten THz-Messeinheit (4b) und einem dritten THz-Transceiver (5c) einer dritten THz-Messeinheit (4c).

2. THz-Messverfahren nach Anspruch 1, **dadurch gekennzeichnet, dass** die abgewandte Wanddicke (wd2a) auf der ersten optischen Achse (B1) durch eine Mittelung, insbesondere als arithmetisches Mittel, der zu dem ersten Reflektor (6a) benachbarten THz-Transceiver (5b, 5c) ermittelt wird.

3. THz-Messverfahren nach Anspruch 1 oder 2, **dadurch gekennzeichnet, dass** die abgewandte Wanddicke (wd2a) auf der ersten optischen Achse (B1) ohne Einbeziehung von Teilreflexionen des ersten Messstrahls (8) an den Grenzflächen des abgewandten Wandbereichs ermittelt wird.

4. THz-Messverfahren nach einem der vorherigen Ansprüche, **dadurch gekennzeichnet, dass** die THz-Transceiver (5) jeweils parallele THz-Messstrahlen (8) ausgeben und die Reflektoren (6) plan ausgebildet sind zur Reflektion der parallelen THz-Messstrahlen (8).

5. THz-Messverfahren nach einem der vorherigen Ansprüche, **dadurch gekennzeichnet, dass** der Strang (3) durch den Messraum (2) ohne Führung durch die THz-Messvorrichtung (1) und ohne eine Führungseinrichtung der THz-Messvorrichtung (1) gefördert wird und durch die THz-Messvorrichtung (1) kontaktlos vermessen wird.

6. THz-Messverfahren nach einem der vorherigen Ansprüche, **dadurch gekennzeichnet, dass**
die mehreren Messachsen (B) in dem Messraum (2) eine Messebene definieren, und die optischen Achsen (B1, B2, B3) der mehreren THz-Mess-einheiten (4; 4a, 4b, 4c) sich in einer gemeinsamen Symmetrieachse (A) der Messebene schneiden,
und der Strang (3) durch die Messebene (E) gefördert und kontinuierlich in der Messebene (E) vermessen wird, wobei der Strang bei seinem Transport durch die Messebene vorzugsweise auch die Symmetrieachse verlassen kann.

7. THz-Messverfahren nach Anspruch 6, **dadurch gekennzeichnet, dass** bei einer Änderung der Position des Stranges (3) in der Messebene die THz-Messeinheiten (4) in der Messebene verstellt oder nachgestellt werden, zur kontaktlosen Zentrierung des Stranges (3), insbesondere in der Symmetrieachse der Messebene, z.B. durch einen Kreuztisch zur Verstellung der THz-Messvorrichtung (1) in den beiden Richtungen der Messebene.

8. THz-Messverfahren nach Anspruch 6 oder 7, **dadurch gekennzeichnet, dass** eine Fehlplatzierung des Strangs (3) gegenüber der Symmetrieachse (A)
- ermittelt wird aus den Messsignalen und/oder einem externen Sensor, und/oder
- bei der Ermittlung der zugewandten und/oder abgewandten Wanddicke (wd1a, wd2a) berücksichtigt wird.

9. THz-Messverfahren nach einem der vorherigen Ansprüche, **dadurch gekennzeichnet, dass** ein mindestens einschichtiger Strang (3) vermessen wird, der eine äußere Grenzfläche (15) und eine innere Grenzfläche (14) aufweist, insbesondere nach einer Extrusion des Stranges (3),
wobei die Schichtdicke aus einer Laufzeitdifferenz zwischen Reflexionspeaks (P1, P2) des Messsignals ermittelt wird.

10. THz-Messverfahren nach einem der vorherigen Ansprüche, **dadurch gekennzeichnet, dass** vor der Objektvermessung und/oder nach der Objektvermessung ein Schritt einer Kalibriermessung bei leerem Messraum (2) durchgeführt wird, bei dem bei leerem Messraum (2) ohne den Strang (3) zumindest der erste THz-Transceiver (5; 5a, 5b, 5c), vorzugsweise alle THz-Transceiver der THz-Messeinheiten (4; 4a, 4b, 4c), jeweils ihren THz-Messstrahl (8) entlang ihrer optischen Achse (B1, B2, B3) ausgeben und den Totalreflexionspeak (TP) an ihrem zugeordneten Reflektor (6; 6a, 6b, 6c) detektieren, und
aus einer Einbeziehung der Kalibriermessung in die Objektmessung ermittelt werden:
die Wanddicken (wd1a, wd2a), ein Brechungsindex (c3) des Materials des Stranges (3), vorzugsweise auch ein Außendurchmesser (AD) und/oder ein Innendurchmesser (ID), des Stranges (3).

11. THz-Messverfahren nach einem der vorherigen Ansprüche, **dadurch gekennzeichnet, dass** in Umfangsrichtung um den Messraum (2) mehr als drei THz-Messeinheiten (4) alternierend angeordnet sind, und für jede THz-Messeinheit (4) jeweils die abgewandte Wanddicke (wd2) als Mittelung der benachbarten THz-Messeinheiten ermittelt wird.

12. THz-Messverfahren nach einem der vorherigen Ansprüche, **dadurch gekennzeichnet, dass** die THz-Transceiver (5) der mehreren THz-Mess-einheiten (4) alternierend ihren THz-Messstrahl (8) aussenden, und vorzugsweise die jeweils passiven THz-Transceiver (5) Streustrahlung an dem Strang (3) detektieren, zur nachfolgenden Ermittlung von Fehlern oder Unregelmäßigkeiten des Stranges (3).

13. THz-Messverfahren nach einem der vorherigen Ansprüche, **dadurch gekennzeichnet, dass** die in Umfangsrichtung um den Messraum (2) angeordneten, alternierenden THz-Messeinheiten (4) einen Wanddickenverlauf der Wanddicke und/oder des Außendurchmessers (AD) und/oder des Innendurchmessers (ID) des Stranges (3), in Umfangsrichtung, ermitteln.

14. THz-Messverfahren nach einem der vorherigen Ansprüche, **dadurch gekennzeichnet, dass** zur Ermittlung der abgewandten Wanddicke (wd2a) zusätzlich zu den zugewandten Wanddicken der benachbarten THz-Messeinheiten auch die übernächsten zugewandten Wanddicken der übernächsten THz-Messeinheiten herangezogen werden, zur Mittelung über mehrere THz-Messeinheiten (4).

15. THz-Messvorrichtung (1) zur Vermessung eines Stranges (3), insbesondere Rohres (3), wobei die THz-Messvorrichtung (1) aufweist:
einen Messraum (2) mit einer Symmetrieachse (A), zur Aufnahme des Stranges (3),
mindestens drei THz-Messeinheiten (4; 4a, 4b, 4c),
wobei jede THz-Messeinheit (4; 4a, 4b, 4c) jeweils einen THz-Transceiver (5; 5a, 5b, 5c) zum Aussenden eines THz-Messstrahls (8) entlang seiner optischen Achse (B; B1, B2, B3) und einen auf der optischen Achse (B1, B2, B3) angeordneten und dem THz-Transceiver (5; 5a, 5b, 5c) gegenüberliegenden Reflektor (6; 6a, 6b, 6c) aufweist,
eine Steuer- und Auswerteeinheit (10), die die Messsignale (S1a, S1b, S1c) der THz-Transceiver (5; 5a, 5b, 5c) aufnimmt und zumindest Wanddicken (wd1a, wd2a) des Stranges (3) ermittelt,
wobei die THz-Messeinheiten (4) alternierend dahingehend angeordnet sind, dass ein erster Reflektor (6a) einer ersten THz-Messeinheit (4a) benachbart ist zu einem zweiten THz-Transceiver (5b) einer zweiten THz-Messeinheit (4b) und einem dritten THz-Transceiver (5c) einer dritten THz-Messeinheit (4c),
wobei die Steuer- und Auswerteeinheit (10) ausgebildet ist, bei einer Vermessung des Stranges (3)
- eine zugewandte Wanddicke (wd1a) des zugewandten Wandbereichs (w1a) aus einem ersten Messsignal (S1a) des ersten Transceivers (5a) zu ermitteln,
**dadurch gekennzeichnet, dass** die Steuer- und Auswerteeinheit (10) ferner dazu ausgebildet ist,
- eine abgewandte Wanddicke (wd2a) des abgewandten Wandbereichs (w2a) des ersten Transceivers (5a) durch eine Mittelung und/oder Interpolation aus Messsignalen (S1b, S1c) des zweiten Transceivers (5b) und des dritten Transceivers (5c) zu ermitteln.

16. THz-Messvorrichtung (1) nach Anspruch 15, **dadurch gekennzeichnet, dass** sie ohne Führungseinrichtung für den Strang (3) ausgebildet ist, und die Steuer- und Auswerteeinheit (10) ausgebildet ist für eine kontaktlose Vermessung des durch den Messraum (2) transportierten Stranges (3).

17. THz-Messvorrichtung (1) nach Anspruch 16, **dadurch gekennzeichnet, dass** sie eine Verstelleinrichtung zur translatorischen, gemeinsamen Verstellung von Transceivern und Reflektoren in der Messebene aufweist, zur Nachstellung an die Position des Stranges (2) ohne Kontaktierung des Stranges.

18. THz-Messvorrichtung (1) nach einem der Ansprüche 15 bis 17, **dadurch gekennzeichnet, dass** der zweite und dritte THz-Transceiver (5b, 5c) mit ihren optischen Achsen (B2, B3) gegenüber der ersten optischen Achse (B1) in symmetrischer Anordnung mit gleichem Versatz-Winkel (α) angeordnet sind.

19. THz-Messvorrichtung (1) nach einem der Ansprüche 15 bis 18, **dadurch gekennzeichnet, dass** der zweite und dritte THz-Transceiver (5b, 5c) mit ihren optischen Achsen (B2, B3) gegenüber der ersten optischen Achse (B1) einen Versatz-Winkel (α) von weniger als 45°, insbesondere weniger als 30°, z.B. weniger als 25° aufweisen.

20. THz-Messvorrichtung (1) nach einem der Ansprüche 15 bis 19, **dadurch gekennzeichnet, dass** die Steuer- und Auswerteeinheit (10) ausgebildet ist, zu jeder der mehreren THz-Messeinheiten (4) jeweils die abgewandte Wanddicke (wd2a) auf ihren optischen Achsen (B2, B3) durch Mittelung der benachbarten THz-Transceiver (5) zu ermitteln.

21. THz-Messvorrichtung (1) nach Anspruch 20, **dadurch gekennzeichnet, dass** mindestens sechs THz-Messeinheiten (4), insbesondere mindestens neun THz-Messeinheiten (4), z.B. mindestens 15 THz- Messeinheiten (4), in Umfangsrichtung um den Messraum (2) beabstandet und zumindest teilweise zueinander alternierend angeordnet sind, vorzugsweise mit gleichem Winkel-Versatz (α) zueinander, und wobei die Steuer- und Auswerteeinheit (10) ausgebildet ist, eine umfängliche Vermessung des Stranges (3) durchzuführen, bei der
- auf jeder optischen Achse (B) jeweils der zugewandte Wandbereich durch die jeweilige THz-Messeinheit (4) und der abgewandte Wandbereiche (w2a) durch die benachbarten THz-Transceiver (5) vermessen werden.

22. THz-Messvorrichtung (1) nach einem der Ansprüche 15 bis 21, **dadurch gekennzeichnet, dass** die THz-Messeinheiten (4) starr oder stationär um den Messraum (2) angeordnet sind.

23. THz-Messvorrichtung (1) nach einem der Ansprüche 15 bis 22, **dadurch gekennzeichnet, dass** zur Ermittlung der abgewandten Wanddicke (wd2a) ergänzend die Messungen der zugewandten Wanddicken der zu den benachbarten THz-Transceivern (5b, 5c) in Umfangsrichtung nachfolgenden THz-Transceiver herangezogen werden, zur Ausbildung eines Wanddickenverlaufs zur Ermittlung der abgewandten Wanddicke (wd2a).

24. THz-Messvorrichtung (1) nach einem der Ansprüche 15 bis 23, **dadurch gekennzeichnet, dass**
- der THz-Transceiver (5) derartig ausgebildet ist, dass er den THz-Messstrahl (8) parallel ausgibt und der Reflektor (6) plan ausgebildet ist zur Reflektion des parallelen THz-Messstrahl (8).

25. THz-Messverfahren oder THZ-Messovorrichtung nach einem der vorherigen Ansprüche, **dadurch gekennzeichnet, dass** der THz-Messstrahl (8) im Frequenzbereich von Terahertz-, Radar- oder Mikrowellenstrahlung liegt, insbesondere zwischen 5 GHz und 50 THz, insbesondere zwischen 10 GHZ bis 10 THZ, insbesondere 20 GHz bis 3 THZ,
insbesondere als Laufzeit-Messung, Frequenzmodulation, z.B. FMCW-Radar, und/oder gepulste Strahlung.

## Claims

1. THz measuring method for measuring a transported strand (3), in particular, an extruded pipe (3), in a measuring space (2) of a THz measuring device (1), including at least the following steps:
- providing at least three THz measuring units (4) around the measuring space (2), the THz measuring units (4) each including a THz transceiver (5, 5a, 5b, 5c) with an optical axis (B) and a reflector (6; 6a, 6b, 6c) arranged in the optical axis (B) and situated opposite in the measuring space (2),
- transporting the strand (3) through the measuring space (2),
- for all THz measuring units (4, 4a, 4b, 4) each
- emitting a THz measuring beam (8) from the THz transceiver (5) along its optical axis (B) and
- detecting reflected THz radiation (9) which has been partially reflected from the wall region facing the THz transceiver (5), and detecting THz radiation (9) which has been reflected on the opposite reflector (6),
and for at least a first THz measuring unit (4a)
- determining a facing wall thickness (wd1a) in the first optical axis (B1) by means of a first measuring signal of the first transceiver (5a),
**characterised by,**
- determining an averted wall thickness (wd2a) of the wall region averted from the transceiver (5a) on the first optical axis (B1) by means of the measuring signals (S1b, S1c) of the THz transceivers (5b, 5c) of the adjacent THz measuring units (4b, 4c) that are adjacent in the circumferential direction to the first reflector (6a),
- the THz measuring units (4) are arranged alternatingly in such a manner that a first reflector (6a) of a first THz measuring unit (4a) is adjacent to a second THz transceiver (5b) of a second THz measuring unit (4b) and a third THz transceiver (5c) of a third THz measuring unit (4c).

2. THz measuring method according to claim 1, **characterised in that** the averted wall thickness (wd2a) on the first optical axis (B1) is determined by means of an averaging, in particular, as the arithmetic mean, of the THz transceivers (5b, 5c) adjacent to the first reflector (6a).

3. THz measuring method according to claim 1 or 2, **characterised in that** the averted wall thickness (wd2a) on the first optical axis (B1) is determined without including partial reflections of the first measuring beam (8) on the boundary surfaces of the averted wall region.

4. THz measuring method according to one of the above claims,
**characterised in that** the THz transceivers (5) each emit parallel THz measuring beams (8), and the reflectors (6) are designed flat for reflecting the parallel THz measuring beams (8).

5. THz measuring method according to one of the above claims,
**characterised in that** the strand (3) is transported through the measuring space (2) without guidance by the THz measuring device (1) and without a guide means of the THz measuring device (1) and is contactless measured by the THz measuring device (1).

6. THz measuring method according to one of the above claims,
**characterised in that** the multiple measuring axes (B) define a measuring plane in the measuring space (2), and the optical axes (B1, B2, B3) of the multiple THz measuring units (4; 4a, 4b, 4c) intersect in a common axis of symmetry (A) of the measuring plane, and the strand (3) is transported through the measuring plane (E) and continuously measured in the measuring plane (E), where, preferably, the strand may deviate from the axis of symmetry while being transported through the measuring plane.

7. THz measuring method according to claim 6, **characterised in that** upon a change in the position of the strand (3) in the measuring plane, the THz measuring units (4) are adjusted or readjusted in the measuring plane, for contactless centring of the strand (3), in particular, in the axis of symmetry of the measuring plane, e.g., by means of a cross table, for adjusting the THz measuring unit (1) in the two directions of the measuring plane.

8. THz measuring method according to claim 6 or 7, **characterised in that** a misplacement of the strand (3) in relation to the axis of symmetry (A)
- is determined from the measuring signals and/or an external sensor, and/or
- is taken into account upon determining the facing and/or averted wall thickness (wd1a, wd2a).

9. THz measuring method according to one of the above claims,
**characterised in that** an at least single-layer strand (3) is measured, which exhibits an exterior boundary surface (15) and an interior boundary surface (14), in particular, following an extrusion of the strand (3),
where the layer thickness is determined from a time-of-flight difference between reflection peaks (P1, P2) of the measuring signal.

10. THz measuring method according to one of the above claims,
**characterised in that** prior to the object measurement and/or after the object measurement, a step of a calibration measurement with an empty measuring space (2) is carried out, in which with an empty measuring space (2) without the strand (3) at least the first THz transceiver (5; 5a, 5b, 5c), preferably all THz transceivers of the THz measuring units (4; 4a, 4b, 4c), each emit their THz measuring beam (8) along their optical axis (B1, B2, B3) und detect the total reflection peak (TP) at their associated reflector (6; 6a, 6b, 6c), und
by taking the calibration measurement into account in the object measurement, the following is determined:
the wall thicknesses (wd1a, wd2a), a refractive index (c3) of the material of the strand (3), preferably also an exterior diameter (AD) and/or an interior diameter (ID), of the strand (3).

11. THz measuring method according to one of the above claims,
**characterised in that** in the circumferential direction around the measuring space (2) more than three THz measuring units (4) are arranged alternatingly, and for each THz measuring unit (4) the averted wall thickness (wd2) is determined by averaging the adjacent THz measuring units.

12. THz measuring method according to one of the above claims,
**characterised in that** the THz transceivers (5) of the multiple THz measuring units (4) emit their THz measuring beam (8) in an alternating manner, and, preferably, the respective passive THz transceivers (5) detect scatter radiation on the strand (3), for subsequent determination of faults or irregularities of the strand (3).

13. THz measuring method according to one of the above claims,
**characterised in that** the alternating THz measuring units (4) arranged in the circumferential direction around the measuring space (2) determine a wall thickness profile of the wall thickness and/or of the exterior diameter (AD) and/or of the interior diameter (ID) of the strand (3), in the circumferential direction.

14. THz measuring method according to one of the above claims,
**characterised in that** for determining the averted wall thickness (wd2a), the next to adjacent facing wall thicknesses of the next to adjacent THz measuring units are used in addition to the facing wall thicknesses of the adjacent THz measuring units, for averaging across multiple THz measuring units (4).

15. THz measuring device (1) for measuring a strand (3), in particular, a pipe (3), the THz measuring device (1) comprising:
a measuring space (2) with an axis of symmetry (A), for receiving the strand (3),
at least three THz measuring units (4; 4a, 4b, 4c),
all THz measuring units (4; 4a, 4b, 4c) each including a THz transceiver (5; 5a, 5b, 5c) for emitting a THz measuring beam (8) along its optical axis (B; B1, B2, B3) and a reflector (6; 6a, 6b, 6c) arranged on the optical axis (B1, B2, B3) and opposite the THz transceiver (5; 5a, 5b, 5c),
a controller and evaluating unit (10) receiving the measuring signals (S1a, S1b, S1c) of the THz transceivers (5; 5a, 5b, 5c) and determining at least wall thicknesses (wd1a, wd2a) of the strand (3),
the THz measuring units (4) being arrange in an alternating manner such that a first reflector (6a) of a first THz measuring unit (4a) is adjacent to a second THz transceiver (5b) of a second THz measuring unit (4b) and a third THz transceiver (5c) of a third THz measuring unit (4c),
the controller and evaluating unit (10) being designed, in performing a measurement of the strand (3)
- to determine a facing wall thickness (wd1a) of the facing wall region (w1a) from a first measuring signal (S1a) of the first transceiver (5a),
**characterised in that** the controller and evaluating unit (10) is designed,
- to determine an averted wall thickness (wd2a) of the averted wall region (w2a) of the first transceiver (5a) by means of averaging and/or interpolation from measuring signals (S1b, S1c) of the second transceiver (5b) and the third transceiver (5c).

16. THz measuring device (1) according to claim 15, **characterised in that** it is designed without guide means for the strand (3), and the controller and evaluating unit (10) is designed for contactless measuring of the strand (3) transported through the measuring space (2).

17. THz measuring device (1) according to claim 16, **characterised in that** it comprises an adjustment means for translational, common adjustment of transceivers and reflectors in the measuring plane, for readapting to the position of the strand (2) without contacting the strand.

18. THz measuring device (1) according to one of the claims 15 through 17,
**characterised in that** the second and third THz transceivers (5b, 5c) are arranged with their optical axes (B2, B3) in relation to the first optical axis (B1) in a symmetrical arrangement at equal offset angles (α).

19. THz measuring device (1) according to one of the claims 15 through 18,
**characterised in that** the optical axes (B2, B3) of the second and third THz transceivers (5b, 5c) have an offset angle of less than 45°, in particular, less than 30°, e.g., less than 25° in relation to the first optical axis (B1).

20. THz measuring device (1) according to one of the claims 15 through 19,
**characterised in that** the controller and evaluating unit (10) is designed to determine, for all of the multiple THz measuring units (4) each, the averted wall thickness (wd2a) in their optical axes (B2, B3) by averaging of the adjacent THz transceivers (5).

21. THz measuring device (1) according to claim 20, **characterised in that** at least six THz measuring units (4), in particular, at least nine THz measuring units (4), e.g., at least 15 THz measuring units (4), are arranged in the circumferential direction around the measuring space (2), spaced apart and at least partially alternating in relation to one another, preferably at equal offset angles (α) in relation to one another, and where the controller and evaluating unit (10) is designed to carry out a circumferential measuring of the strand (3) in which
- on each optical axis (B) always the facing wall region is measured by the respective THz measuring unit (4) und and the averted wall region (w2a) by means of the adjacent THz transceivers (5).

22. THz measuring device (1) according to one of the claims 15 through 21,
**characterised in that** the THz measuring units (4) are arranged fixed or stationary around the measuring space (2).

23. THz measuring device (1) according to one of the claims 15 through 22,
**characterised in that** for determining the averted wall thickness (wd2a) the measurements of the facing wall thicknesses of the THz transceivers next following to the adjacent THz transceivers (5b, 5c) in the circumferential direction are used additionally, for generating a wall thickness profile for determining the averted wall thickness (wd2a).

24. THz measuring device (1) according to one of the claims 15 through 23,
**characterised in that**
- the THz transceiver (5) is designed such that it emits the THz measuring beam (8) in a parallel manner, and the reflector (6) is designed flat so as to reflect the parallel THz measuring beam (8).

25. THz measuring method or THZ measuring device according to one of the above claims, **characterised in that** the THz measuring beam (8) lies in a frequency range of terahertz, radar or microwave radiation, in particular, between 5 GHz and 50 THz, in particular, between 10 GHZ and 10 THz, in particular, 20 GHz and 3 THz,
in particular, as a time-of-flight measurement, frequency modulation, e.g., FMCW radar, and/or pulsed radiation.

## Revendications

1. Procédé de mesure THz pour mesurer un brin transporté (3), en particulier un tuyau extrudé (3), dans un espace de mesure (2) d'un dispositif de mesure THz (1), comprenant au moins les étapes suivantes :
- Préparation d'au moins trois unités de mesure THz (4) tout autour de l'espace de mesure (2), où les unités de mesure (4) comportent respectivement un émetteur-récepteur THz (5 ; 5a, 5b, 5c) avec un axe optique (B) et un réflecteur (6 ; 6a, 6b, 6c) disposé sur l'axe optique (B) et à l'opposé dans l'espace de mesure (2),
- transport du brin (3) à travers l'espace de mesure (2),
- depuis respectivement chaque unité de mesure THz (4 ; 4a, 4b, 4c)
- émission d'un rayon de mesure (8) par l'émetteur-récepteur THz (5) le long de son axe optique (B) et
- détection d'un rayonnement THz réfléchi (9) partiellement réfléchi par la portion de paroi tournée vers l'émetteur-récepteur THz (5) et détection d'un rayonnement THz (9) réfléchi au niveau du réflecteur opposé (6),
et pour au moins une première unité de mesure THz (4a)
- détermination d'une épaisseur de paroi rapprochée (wd1a) sur le premier axe optique (B1) grâce à un premier signal de mesure du premier émetteur-récepteur (5a),
**caractérisé par**
- la détermination d'une épaisseur de paroi éloignée (wd2a) de la portion de paroi éloignée de l'émetteur-récepteur (5a) sur le premier axe optique (B1) grâce aux signaux de mesure (S1b, S1c) des émetteurs-récepteurs THz (5b, 5c) voisins du premier réflecteur (6a) sur la circonférence des unités de mesure THz (4b, 4c) voisines,
- où les unités de mesure THz (4) sont disposées en alternance de sorte qu'un premier réflecteur (6a) d'une première unité de mesure THz (4a) soit voisin d'un deuxième émetteur-récepteur THz (5b) d'une deuxième unité de mesure THz (4b) et d'un troisième émetteur-récepteur THz (5c) d'une troisième unité de mesure THz (4c).

2. Procédé de mesure THz selon la revendication 1, **caractérisé en ce que** l'épaisseur de paroi éloignée (wd2a) sur le premier axe optique (B1) est déterminée par la détermination d'une moyenne, en particulier par la détermination d'une moyenne arithmétique, des émetteurs-récepteurs THz (5b, 5c) voisins du premier réflecteur (6a).

3. Procédé de mesure THz selon la revendication 1 ou 2,
**caractérisé en ce que** l'épaisseur de paroi éloignée (wd2a) sur le premier axe optique (B1) est déterminée sans prendre en compte les réflexions partielles du premier rayon de mesure (8) sur les surfaces limites de la portion de paroi éloignée.

4. Procédé de mesure THz selon l'une des revendications précédentes, **caractérisé en ce que** les émetteurs-récepteurs THz (5) émettent respectivement des rayons de mesure THz parallèles (8) et **en ce que** les réflecteurs (6) sont conçus plans pour réfléchir les rayons de mesure THz parallèles (8).

5. Procédé de mesure THz selon l'une des revendications précédentes, **caractérisé en ce que** le brin (3) est acheminé à travers l'espace de mesure (2) sans guidage à travers le dispositif de mesure THz (1) et sans dispositif de guidage du dispositif de mesure THz (1) et est mesuré à travers le dispositif de mesure THz (1) sans contact.

6. Procédé de mesure THz selon l'une des revendications précédentes, **caractérisé en ce que**
les plusieurs axes de mesure (B) dans l'espace de mesure (2) définissent un plan de mesure et les axes optiques (B1, B2, B3) des plusieurs unités de mesure THz (4 ; 4a, 4b, 4c) se recoupent en un axe de symétrie commun (A),
et le brin (3) est acheminé à travers le plan de mesure (E) et est mesuré en continu dans le plan de mesure (E), le brin pouvant également quitter l'axe de symétrie préférentiellement à travers le plan de mesure.

7. Procédé de mesure THz selon la revendication 6, **caractérisé en ce qu'en** cas de changement de la position du brin (3) dans le plan de mesure, les unités de mesure THz (4) sont déplacées ou réajustées dans le plan de mesure pour centrer le brin (3) sans contact, en particulier dans l'axe de symétrie du plan de mesure, p. ex. grâce à une platine destinée à déplacer le dispositif de mesure THz (1) dans les deux directions du plan de mesure.

8. Procédé de mesure THz selon la revendication 6 ou 7,
**caractérisé en ce qu'un** mauvais positionnement du brin (3) par rapport à l'axe de symétrie (A)
- est déterminé à partir des signaux de mesure et/ou d'un capteur externe, et/ou
- est pris en compte lors de la détermination de l'épaisseur de la paroi rapprochée et/ou éloignée (wd1a, wd2a).

9. Procédé de mesure THz selon l'une des revendications précédentes, **caractérisé en ce qu'**est mesuré un brin au moins monocouche (3) qui présente une surface limite externe (15) et une surface limite interne (14), en particulier après l'extrusion du brin (3),
où l'épaisseur de couche est déterminée à partir de la différence de temps de parcours entre pics de réflexion (P1, P2) du signal de mesure.

10. Procédé de mesure THz selon l'une des revendications précédentes, **caractérisé en ce qu'**avant la mesure de l'objet et/ou après la mesure de l'objet, une étape de mesure d'étalonnage est effectuée avec l'espace de mesure (2) vide au cours de laquelle, avec l'espace de mesure (2) vide sans le brin (3), au moins le premier émetteur-récepteur THz (5 ; 5a, 5b, 5c), de préférence tous les émetteurs-récepteurs THz des unités de mesure THz (4 ; 4a, 4b, 4c), émettent respectivement leur rayon de mesure THz (8) le long de leur axe optique (B1, B2, B3) et détectent le pic de réflexion totale (TP) au niveau de leur réflecteur associé (6 ; 6a, 6b, 6c), et
sont déterminées à partir d'une prise en compte de la mesure d'étalonnage dans la mesure d'objet :
les épaisseurs de paroi (wd1a, wd2a), un indice de réfraction (c3) du matériau du brin (3), de préférence aussi un diamètre externe (AD) et/ou un diamètre interne (ID) du brin (3).

11. Procédé de mesure THz selon l'une des revendications précédentes, **caractérisé en ce que** sur la circonférence autour de l'espace de mesure (2) sont disposées plus de trois unités de mesure THz (4) en alternance, et **en ce que** l'épaisseur de paroi éloignée (wd2) est déterminée respectivement pour chaque unité de mesure THz (4) en tant que moyenne des unités de mesure THz voisines.

12. Procédé de mesure THz selon l'une des revendications précédentes, **caractérisé en ce que** les émetteurs-récepteurs THz (5) des plusieurs unités de mesure THz (4) émettent en alternance leur rayon de mesure THz (8) et, de préférence, les émetteurs-récepteurs (5) passifs respectifs détectent un rayonnement diffusé au niveau du brin (3) pour déterminer à partir de là des erreurs ou des irrégularités du brin (3).

13. Procédé de mesure THz selon l'une des revendications précédentes, **caractérisé en ce que** les unités de mesure THz (4) disposées en alternance sur la circonférence autour de l'espace de mesure (2) déterminent un tracé de l'épaisseur de paroi et/ou du diamètre externe (AD) et/ou du diamètre interne (ID) du brin (3) sur la circonférence.

14. Procédé de mesure THz selon l'une des revendications précédentes, **caractérisé en ce que** pour déterminer l'épaisseur de la paroi éloignée (wd2a), on utilise aussi, en plus des épaisseurs de paroi rapprochées des unités de mesure THz voisines, les épaisseurs de paroi rapprochées encore suivantes des unités de mesure THz encore suivantes pour faire une moyenne sur plusieurs unités de mesure THz (4).

15. Dispositif de mesure THz (1) pour mesurer un brin (3), en particulier un tuyau (3), le dispositif de mesure THz (1) comportant :
un espace de mesure (2) avec un axe de symétrie (A) destiné à accueillir le brin (3),
au moins trois unités de mesure THz (4 ; 4a, 4b, 4c),
où chaque unité de mesure THz (4 ; 4a, 4b, 4c) comporte respectivement un émetteur-récepteur THz (5 ; 5a, 5b, 5c) pour émettre un rayon de mesure THz (8) avec son axe optique (B ; B1, B2, B3) et un réflecteur (6 ; 6a, 6b, 6c) disposé sur l'axe optique (B1, B2, B3) et à l'opposé de l'émetteur-récepteur THz (5 ; 5a, 5b, 5c),
une unité de commande et d'évaluation (10) qui reçoit les signaux de mesure (S1a, S1b, S1c) des émetteurs-récepteurs THz (5 ; 5a, 5b, 5c) et détermine au moins des épaisseurs de paroi (wd1a, wd2a) du brin (3),
où les unités de mesure THz (4) sont disposées en alternance de sorte qu'un premier réflecteur (6a) d'une première unité de mesure THz (4a) soit voisin d'un deuxième émetteur-récepteur THz (5b) d'une deuxième unité de mesure THz (4b) et d'un troisième émetteur-récepteur THz (5c) d'une troisième unité de mesure THz (4c),
où l'unité de commande et d'évaluation (10) est conçue, lors d'une mesure du brin (3),
- pour déterminer une épaisseur de paroi rapprochée (wd1a) de la portion de paroi rapprochée (w1a) à partir d'un premier signal de mesure (S1a) du premier émetteur-récepteur (5a), **caractérisée en ce que** l'unité de commande et d'évaluation (10) est conçue en outre
- pour déterminer une épaisseur de paroi éloignée (wd2a) de la portion de paroi éloignée (w2a) du premier émetteur-récepteur (5a) en faisant une moyenne et/ou une interpolation de signaux de mesure (S1b, S1c) du deuxième émetteur-récepteur (5b) et du troisième émetteur-récepteur (5c).

16. Dispositif de mesure THz (1) selon la revendication 15,
**caractérisé en ce qu'il** est conçu sans dispositif de guidage pour le brin (3) et **en ce que** l'unité de commande et d'évaluation (10) est conçue pour une mesure sans contact du brin (3) transporté à travers l'espace de mesure (2).

17. Dispositif de mesure THz (1) selon la revendication 16,
**caractérisé en ce qu'**il comporte un dispositif de déplacement pour déplacer en translation ensemble les émetteurs-récepteurs et les réflecteurs dans le plan de mesure pour suivre la position du brin (3) sans entrer en contact avec le brin.

18. Dispositif de mesure THz (1) selon l'une des revendications 15 à 17, **caractérisé en ce que** le deuxième et le troisième émetteurs-récepteurs THz (5b, 5c) avec leurs axes optiques (B2, B3) sont disposés symétriquement avec le même angle de décalage (α) par rapport au premier axe optique (B1).

19. Dispositif de mesure THz (1) selon l'une des revendications 15 à 18, **caractérisé en ce que** le deuxième et le troisième émetteurs-récepteurs THz (5b, 5c) avec leurs axes optiques (B2, B3) présentent un angle de décalage (α) par rapport au premier axe optique (B1) inférieur à 45°, en particulier inférieur à 30°, p. ex. inférieur à 25°.

20. Dispositif de mesure THz (1) selon l'une des revendications 15 à 19, **caractérisé en ce que** l'unité de commande et d'évaluation (10) est conçue pour déterminer respectivement pour chacune des plusieurs unités de mesure THz (4) l'épaisseur de paroi éloignée (wd2a) sur leurs axes optiques (B2, B3) en faisant la moyenne des émetteurs-récepteurs THz (5) voisins.

21. Dispositif de mesure THz (1) selon la revendication 20,
**caractérisé en ce qu'**au moins six unité de mesure THz (4), en particulier au moins neuf unités de mesure THz (4), p. ex. au moins 15 unités de mesure THz (4), sont disposés sur la circonférence autour de l'espace de mesure (2), espacés et au moins partiellement en alternance les unes par rapport aux autres, de préférence avec un même angle de décalage (α) les unes par rapport aux autres, et où l'unité de commande et d'évaluation (10) est conçue pour effectuer une mesure circonférentielle du brin (3), dans laquelle
- respectivement sur chaque axe optique (B), la portion de paroi rapprochée est mesurée par l'unité de mesure THz (4) respective et la portion de paroi éloignée (w2a) est mesurée par les émetteurs-récepteurs THz (5) voisins.

22. Dispositif de mesure THz (1) selon l'une des revendications 15 à 21, **caractérisé en ce que** les unités de mesure THz (4) sont disposées fixes ou stationnaires autour de l'espace de mesure (2).

23. Dispositif de mesure THz (1) selon l'une des revendications 15 à 22, **caractérisé en ce que** pour déterminer l'épaisseur de la paroi éloignée (wd2a), on utilise en complément les mesures des épaisseurs de parois rapprochées des émetteurs-récepteurs THz (5b, 5c) suivants sur la circonférence des émetteurs-récepteurs THz voisins pour former un tracé d'épaisseur de paroi afin de déterminer l'épaisseur de la paroi éloignée (wd2a).

24. Dispositif de mesure THz (1) selon l'une des revendications 15 à 23, **caractérisé en ce que**
- l'émetteur-récepteur THz (5) est conçu de sorte qu'il émette son rayon de mesure THz (8) parallèle et que le réflecteur (6) soit conçu plan pour réfléchir le rayon de mesure THz (8) parallèle.

25. Procédé de mesure THz ou dispositif de mesure THz selon l'une des revendications précédentes, **caractérisé en ce que** le rayon de mesure THz (8) se situe dans la gamme de fréquence des rayonnements térahertz, radar ou micro-ondes, en particulier entre 5 GHz et 50 THz, en particulier entre 10 GHz et 10 THz, en particulier entre 20 GHz et 3 THz, en particulier en tant que mesure de temps de parcours, modulation de fréquence, p. ex. radar FMCW et/ou rayonnement pulsé.
